# EUROPÄISCHE PATENTSCHRIFT

(11) **EP 1 205 276 B1**
(45) Veröffentlichungstag und Bekanntmachung des Hinweises auf die Patenterteilung: **13.08.2003**
(21) Anmeldenummer: 00124430.0
(22) Anmeldetag: 08.11.2000
(51) Int. Cl.: B23Q 3/155

(54) **Haltevorrichtung für wenigstens eine an einer Werkzeugmaschine ein- und auswechselbare Funktionseinheit**
Retaining device for at least one functional unit exchangable in a machine tool
Dispositif de retenue pour au moins une unité fonctionnelle remplaçable dans une machine outil

(43) Veröffentlichungstag der Anmeldung: 15.05.2002
(73) Patentinhaber: Trumpf GmbH & Co, D-71254 Ditzingen (DE)
(72) Erfinder: Laib, Wolfgang Konstrukteur, 74354 Besigheim (DE)
(74) Vertreter: KOHLER SCHMID + PARTNER

(56) Entgegenhaltungen:
- DE-A- 3 818 001
- US-A- 4 023 788
- US-A- 4 274 801
- US-A- 4 624 044
- US-A- 5 224 915
- US-A- 5 669 866

## Beschreibung

Die Erfindung betrifft eine Haltevorrichtung für wenigstens eine an einer Werkzeugmaschine ein- und auswechselbare Funktionseinheit, mit zumindest einem Träger für wenigstens eine Funktionseinheit, wobei die Funktionseinheit mittels einer lösbaren Verriegelungseinrichtung in einer Gebrauchsstellung an dem Träger sicherbar ist und die Verriegelungseinrichtung wenigstens ein dem Träger zugeordnetes Verriegelungselement, wenigstens ein damit zusammenwirkendes, der Funktionseinheit zugeordnetes Verriegelungselement sowie wenigstens ein Betätigungselement umfasst in Form eines Hohlkörpers mit einem gesteuert druckbeaufschlagbaren Hohlkörperinnern sowie mit einer durch Änderung des Druckes im Hohlkörperinnern verformbaren Hohlkörperwand, wobei wenigstens eines der Verriegelungselemente als Schwenkhebel ausgebildet ist und die miteinander zusammenwirkenden Verriegelungselemente durch innendruckgesteuerte Formänderung der Hohlkörperwand relativ zueinander in eine Verriegelungs- und/oder in eine Freigabestellung bewegbar sind, indem das als Schwenkhebel ausgebildete Verriegelungselement unter Beaufschlagung über die Hohlkörperwand in eine Verriegelungsund/oder in eine Freigabestellung auslenkbar ist.

Eine derartige Haltevorrichtung ist bekannt aus EP 0 650 782 A1. Im Falle des Standes der Technik sind an einer Abkantpresse Anschlagfinger eines Hinteranschlagsystems in Richtung der Biegelinie des Pressenwerkzeuges verschiebbar und in unterschiedlichen Verschiebepositionen arretierbar. Zur Arretierung eines Anschlagfingers dient dabei eine Verriegelungseinrichtung, die ein mit dem Anschlagfinger verbundenes Federelement sowie einen an einem Träger des Hinteranschlagsystems angebrachten Klemmmechanismus umfasst. Der Klemmmechanismus wiederum besteht im Wesentlichen aus einem sich in Richtung der Biegelinie des Pressenwerkzeuges erstreckenden U-Profil sowie aus einem zwischen den Schenkeln des U-Profils angeordneten und gleichfalls in Richtung der Biegelinie des Pressenwerkzeuges verlaufenden Druckluftschlauch. Das an dem Anschlagfinger angebrachte Federelement greift mit seinem freien Ende zwischen die Außenwand des Druckluftschlauches und den diesem gegenüberliegenden Schenkel des U-Profils. Bei entlüftetem Druckluftschlauch ist der Anschlagtinger in Richtung der Biegelinie des Pressenwerkzeuges verschiebbar. Das freie Ende des anschlagfingerseitigen Federelementes bewegt sich dabei in dem Zwischenraum zwischen Druckluftschlauch und U-Profil. Zur Arretierung des Anschlagfingers ist der Druckluftschlauch in seinem Innern mit Druckmedium zu beaufschlagen. Infolge der damit verbundenen Verformung des Druckluftschlauches wird das freie Ende des an dem Anschlagfinger angebrachten Federelementes zwischen dem Druckluftschlauch und dem U-Profil geklemmt. Es ergibt sich dadurch eine kraftschlüssige Fixierung des mit dem Federelement versehenen Anschlagfingers in Richtung der Biegelinie des Pressenwerkzeuges.

Eine Haltevorrichtung in Form einer Vorschubeinrichtung einer Stanzmaschine ist offenbart in DE-A-38 18 001. An einer Tragschiene dieser Vorschubeinrichtung ist eine Mehrzahl von als Haltevorrichtungen für Stanzwerkzeuge dienenden Werkzeugkassetten lösbar angebracht. Zur Sicherung der Werkzeugkassetten in der Gebrauchsstellung an der Tragschiene dienen Verriegelungseinrichtungen, die als Verriegelungselemente jeweils eine tragschienenseitige, von einer vorgespannten Rastfeder in ihre Verriegelungsstellung gedrückte Rastkugel sowie eine mit dieser zusammenwirkende Rastaufnahme an der betreffenden Werkzeugkassette aufweisen. Beim Anbringen einer Werkzeugkassette an der Tragschiene ist die Rastkugel zunächst ausgehend von ihrer Verriegelungsstellung gegen die Wirkung der sie beaufschlagenden Rastfeder in die Freigabestellung zu bewegen, ehe sie unter Sicherung der Werkzeugkassette in der Gebrauchsstellung federkraftbeaufschlagt in die zugeordnete Rastaufnahme an der Werkzeugkassette einrasten und damit erneut ihre Verriegelungsstellung einnehmen kann. Entsprechend ist beim Abnehmen einer Werkzeugkassette von der Tragschiene die zwischen Tragschiene und Werkzeugkassette hergestellte Rastverbindung durch Verdrängen der federkraftbeaufschlagten Rastkugel aus der Verriegelungsin die Freigabestellung zu lösen. Die zum Bewegen der Rastkugel aus der Verriegelungs- in die Freigabestellung erforderliche Kraft ist jeweils von dem Bediener aufzubringen.

Aus praktischer Anwendung, beispielsweise durch die von der Firma "TRUMPF GmbH + Co. KG", 71254 Ditzingen (Deutschland) unter der Typenbezeichnung "TRUMATIC ® 500 ROTATION" vertriebenen Stanzmaschinen, sind Haltevorrichtungen in Form von Vorschubeinrichtungen bekannt, im Falle derer zur Sicherung von Werkzeugkassetten an der Tragschiene der Vorschubeinrichtung zusätzlich zu Rastkugeln und Rastaufnahmen der vorstehenden Art tragschienenseitig federelastische Rastnasen verwendet werden, die in Richtung auf ihre Verriegelungsstellung vorgespannt sind und bei in Gebrauchsstellung befindlichen Werkzeugkassetten an diesen vorgesehene Rastvorsprünge hintergreifen. Beim Anbringen der Werkzeugkassetten an der Tragschiene ist auch die Rastnase zunächst in die Freigabestellung auszulenken, ehe sie in ihre Verriegelungsstellung zurückfedert und dann die betreffende Werkzeugkassette in der Gebrauchsstellung sichert. Die Kraft zum Auslenken der Rastnase ist ebenfalls von dem Bediener aufzubringen. Beim Abnehmen der Werkzeugkassetten von der Tragschiene ist von dem Bediener zum Überführen der Rastnasen in die Freigabestellung ein eigens zu diesem Zweck vorgesehener Rüsthebel zu verwenden.

Ausgehend von dem eingangs gewürdigten Stand der Technik nach EP 0 650 782 A1 liegt der vorliegenden Erfindung die Aufgabe zugrunde, eine verbesserte Sicherung von Funktionseinheiten in der Gebrauchsstellung zu gewährleisten.

Erfindungsgemäß gelöst wird diese Aufgabe durch eine Haltevorrichtung der eingangs angegebenen Art, welche'die kennzeichnenden Merkmale von Patentanspruch 1 aufweist. Die betreffenden Verriegelungseinrichtungen lassen sich maschinell und somit ohne unmittelbare Einwirkung des Bedieners in ihre Verriegelungsund/oder in ihre Freigabestellung schalten. Dabei ist die Umsetzung des Erfindungskonzeptes mit konstruktiv einfachen und lediglich einen geringen Einbauraum benötigenden Mitteln möglich. Bei dem Schwenkhebel, wie er ausweislich Patentanspruch 1 vorgesehen ist, handelt es sich um ein Bauteil, mittels dessen bei entsprechender Wahl der Schwenklagerung bereits geringfügige Verformungen des als Betätigungselement dienenden Hohlkörpers in hinreichend große Schaltwege umgesetzt werden können. Bei Einsatz der erfindungsgemäßen Verriegelungseinrichtung lässt sich eine ungewollte, etwa in Folge von Erschütterungen auftretende und für den reibungslosen Maschinenbetrieb schädliche Lageänderung von in der Gebrauchsstellung befindlichen Funktionseinheiten vermeiden.

In die Freigabestellung müssen die Verriegelungselemente zur Sicherung der betreffenden Funktionseinheit dann überführt sein, wenn letztere an dem zugehörigen Träger angebracht oder von diesem abgenommen wird - also stets dann, wenn die betreffende Funktionseinheit zu handhaben ist. Vor diesem Hintergrund ist es insbesondere von Vorteil, wenn die miteinander zusammenwirkenden Verriegelungselemente durch innendruckgesteuerte Formänderung des als Betätigungselement dienenden Hohlkörpers und somit maschinell in die Freigabestellung bewegbar sind. Bevorzugte Bauarten der erfindungsgemäßen Haltevorrichtung ergeben sich aus den abhängigen Patentansprüchen 2 bis 10.

Die Erfindungsbauart nach Patentanspruch 2 zeichnet sich dadurch aus, dass eine aktive Steuerung des Druckes im Hohlkörperinnern lediglich zum Überführen der Verriegelungselemente aus einer Ausgangs- in eine Zielstellung erforderlich ist. Die Rückführung der Verriegelungselemente in die Ausgangsstellung erfolgt unter der Wirkung der anspruchsgemäßen elastischen Rückstellkraft selbsttätig. Entsprechend bedingt das kennzeichnende Merkmal von Patentanspruch 3, dass die Hohlkörperwand nach einer innendruckbedingten Verformung selbsttätig wieder ihre ursprüngliche Form annimmt.

In erster Linie der konstruktiv einfachen Gestaltung der Gesamtanordnung dienen die kennzeichnenden Merkmale der Patentansprüche 4 bis 7. So steht an dem Träger für die betreffende Funktionseinheit der benötigte Einbauraum für den oder die als Betätigungselemente dienenden Hohlkörper ohne Weiteres zur Verfügung. Bei schlauchartiger Ausbildung lässt sich der Hohlkörper einfach und platzsparend unterbringen. Druckluft und/oder Drucköl werden an Werkzeugmaschinen üblicherweise ohnehin genutzt. Insofern bietet sich der Einsatz dieser Druckmedien auch zur Steuerung des Druckes im Innern erfindungsgemäßer Hohlkörper an. Die Verwendung ein und desselben Hohlkörpers zum Schalten mehrerer Verriegelungseinrichtungen erlaubt beispielsweise eine funktionsgerechte Steuerung der Verriegelungseinrichtungen mit einem geringen steuerungs- und/oder schaltungstechnischen Aufwand.

Im Falle der Erfindungsbauart nach Patentanspruch 8 werden die Verriegelungselemente vorteilhafterweise außer zur Sicherung der betreffenden Funktionseinheit gegen ungewollte Bewegung auch zur exakten Ausrichtung dieser Funktionseinheit genutzt.

Die Patentansprüche 9 und 10 beschreiben Ausführungsformen der Erfindung, im Falle derer die erfindungsgemäßen Merkmale mit besonders großem praktischen Nutzen verbunden sind.

Nachstehend wird die Erfindung anhand schematischer Darstellungen zu einem Ausführungsbeispiel näher erläutert. Es zeigen:
- Figur 1: eine stark schematisierte perspektivische Teildarstellung einer Werkzeugmaschine in Form einer Stanzmaschine mit einer einen Träger aufweisenden Vorschubeinrichtung für ein Werkstück sowie für Bearbeitungswerkzeuge,
- Figur 2: einen detaillierten Ausschnitt des Trägers nach Figur 1 ohne Werkstückhalter und ohne Werkzeughalter in der Ansicht in Richtung des Pfeils II in Figur 1,
- Figur 3: eine Figur 2 entsprechende Darstellung des Trägers nach Figur 1 mit einem Werkstückhalter sowie mit einem Werkzeughalter,
- Figur 4: den Werkzeughalter nach Figur 3 in Verbindung mit einer Schnittdarstellung des Trägers nach Figur 1 mit einer in Figur 2 senkrecht zu der Zeichenebene sowie in Richtung der Linie IV-IV verlaufenden Schnittebene,
- Figur 5: den Werkzeughalter nach den Figuren 3 und 4 in der Ansicht in Richtung des Pfeils V in Figur 4,
- Figur 6: ein Schwenkprofil zur Verriegelung des Werkzeughalters nach den Figuren 3 bis 5 an dem zugehörigen Träger und
- Figur 7: eine Figur 4 entsprechende Schnittdarstellung des Trägers nach Figur 1 in Verbindung mit einem in der Gebrauchsstellung verriegelten Werkzeughalter.

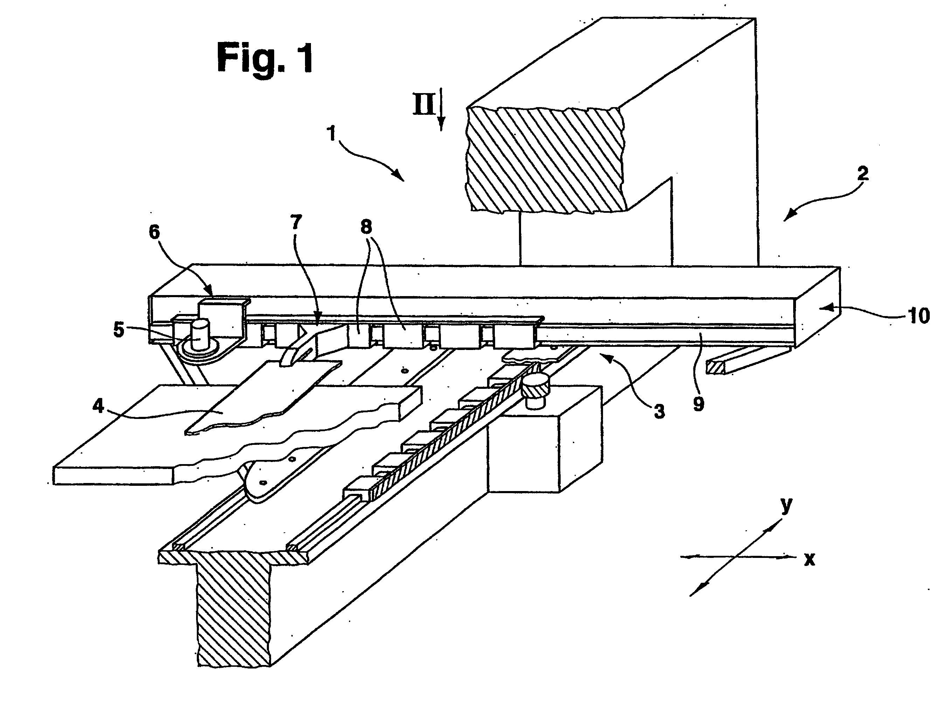

Ausweislich Figur 1 umfasst eine Werkzeugmaschine in Form einer Stanzmaschine 1 ein Maschinengestell 2 sowie eine daran gelagerte Vorschubeinrichtung 3. Diese dient zum Verfahren eines Werkstückes in Form eines Bleches 4 sowie von Bearbeitungswerkzeugen in Form von Stanzwerkzeugen 5 gegenüber einer nicht gezeigten Stanzstation der Stanzmaschine 1. Die Bewegungsebene des Bleches 4 sowie der Stanzwerkzeuge 5 ist durch Koordinatenachsen x, y definiert.

Die Stanzwerkzeuge 5 sind über Werkzeughalter in Form von Werkzeugkassetten 6, das Blech 4 ist über Werkstückhalter in Form von Pratzen 7 an Führungswagen 8 lösbar angebracht. Bei den Werkzeugkassetten 6 sowie bei den Pratzen 7 handelt es sich um Funktionseinheiten, die an der Stanzmaschine 1 ein- und auswechselbar sind. In Figur 1 gezeigt sind der Anschaulichkeit halber lediglich eine Werkzeugkassette 6 sowie eine Pratze 7. Die Führungswagen 8 sind an einer Führungsschiene 9 eines Trägers 10 der Vorschubeinrichtung 3 in Richtung der x-Achse bewegbar geführt. Insofern bildet die Vorschubeinrichtung 3 eine Haltevorrichtung für Werkzeugkassetten 6 und Pratzen 7 und somit für Funktionseinheiten, die an der Stanzmaschine 1 ein- und auswechselbar sind. Gleichzeitig wird die Vorschubeinrichtung 3 als Magazin für Stanzwerkzeuge 5 genutzt. Der Träger 10 ist in Richtung der x-Achse ortsfest und in Richtung der y-Achse an dem Maschinengestell 2 entlang verfahrbar.

Durch entsprechendes Verfahren der Führungswagen 8 in Richtung der x-Achse und/oder des Trägers 10 in Richtung der y-Achse werden das Blech 4 bzw. die Bearbeitungswerkzeuge 5 in einer für die Bearbeitung des Bleches 4 erforderlichen Art und Weise gegenüber der nicht gezeigten, an dem in Figur 1 vorderen Ende des abgebrochen dargestellten Maschinengestells 2 vorgesehenen Stanzstation der Stanzmaschine 1 positioniert. Diesbezügliche Einzelheiten zu der im Grundsatz bekannten Funktionsweise der Vorschubeinrichtung 3 können DE-A-38 18 001 entnommen werden. Der Inhalt dieser Druckschrift wird der vorliegenden Offenbarung ausdrücklich hinzugefügt.

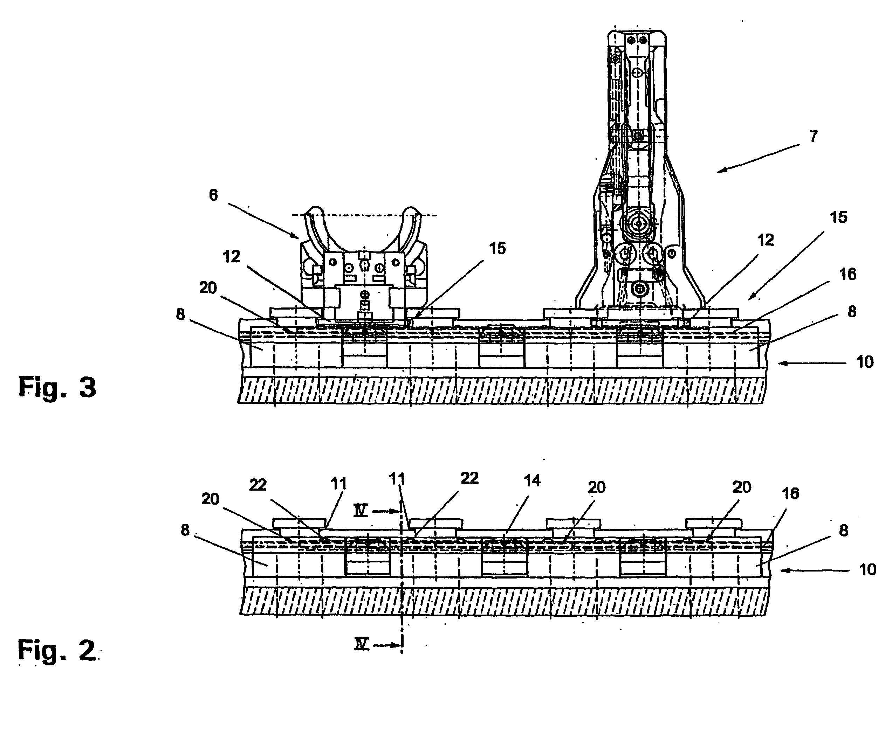

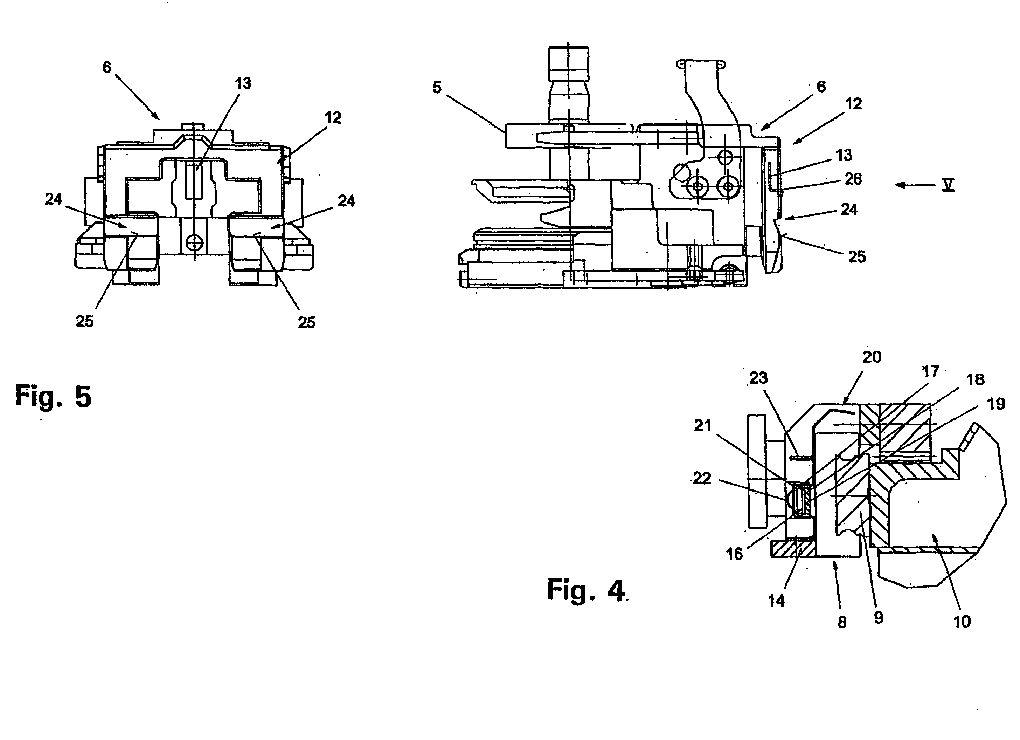

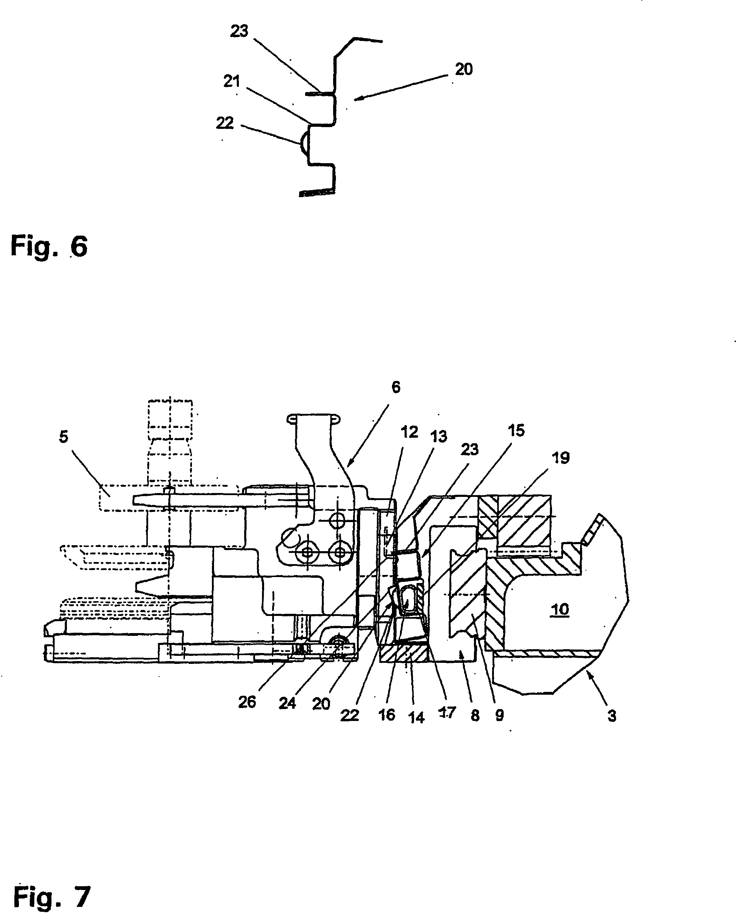

Sowohl die Werkzeugkassetten 6 als auch die Pratzen 7 sind an den zugehörigen Führungswagen 8 lösbar angebracht. Zu diesem Zweck sind die Führungswagen mit im Einzelnen den Figuren 2 und 3 zu entnehmenden hinterschnittenen Einschubnuten 11 versehen. Den Einschubnuten 11 an den Führungswagen 8 zugeordnet sind entsprechend gestaltete Ränder einer Halteplatte 12 an den Werkzeugkassetten 6 sowie den Pratzen 7. In Schwerkraftrichtung oben sind die Einschubnuten 11 offen. Dementsprechend lassen sich die Werkzeugkassetten 6 sowie die Pratzen 7 zur Montage an dem Träger 10 mit ihren Halteplatten 12 von oben her in die Einschubnuten 11 einführen. Die betreffende Einschubbewegung endet, sobald die Halteplatte 12 der betreffenden Werkzeugkassette 6 bzw. der betreffenden Pratze 7 auf einer als Positionieranschlag dienenden Anschlagleiste 14 aufsetzt, die an den Führungswagen 8 angebracht ist (Figuren 4 und 7) und sich dort über die Gesamtlänge der Führungswagen 8 in Richtung der x-Achse erstreckt. Liegt die Halteplatte 12 auf der Anschlagleiste 14 auf, so nimmt die betreffende Werkzeugkassette 6 oder die betreffende Pratze 7 ihre Gebrauchsstellung an der Vorschubeinrichtung 3 bzw. an dem Träger 10 ein. Durch die Gebrauchsstellung der Werkzeugkassetten 6 sowie der Pratzen 7 ist die Lage der Stanzwerkzeuge 5 bzw. des Blechs 4 gegenüber der Bearbeitungsstation der Stanzmaschine 1 in einer für den Maschinenbetrieb erforderlichen Art und Weise definiert. Angedeutet ist ein Stanzwerkzeug 5 üblicher Bauart in den Figuren 4 und 7.

Zur Vermeidung einer ungewollten, für den reibungslosen Maschinenbetrieb schädlichen Lageänderung der in der Gebrauchsstellung befindlichen Werkzeugkassetten 6 beispielsweise infolge von Erschütterungen ist eine Verriegelungseinrichtung 15 vorgesehen, deren Details den Figuren 2 bis 7 entnommen werden können. Auf entsprechende Art und Weise sind auch die Pratzen 7 in der Gebrauchsstellung an der Vorschubeinrichtung 3 gesichert.

Die Verriegelungseinrichtung 15 zur Lagesicherung der Werkzeugkassetten 6 umfasst als Betätigungselement einen schlauchartigen Hohlkörper in Form eines Pneumatikschlauches 16. Dieser besitzt eine elastisch verformbare Hohlkörper-, d.h. Schlauchwand 17 und ist an die Druckluftversorgung der Stanzmaschine 1 angeschlossen. Er verläuft an sämtlichen Führungswagen 8 entlang und ist dabei im Innern eines Führungskanales 18 untergebracht. Dieser wird an seiner von den zu fixierenden Werkzeugkassetten 6 abliegenden Seite von einer Gegendruckleiste 19 begrenzt, die sich ebenso wie der Pneumatikschlauch 16 als einheitliches Bauteil an sämtlichen Führungswagen 8 entlang erstreckt. Außerdem wird der Führungskanal 18 für den Pneumatikschlauch 16 begrenzt durch Schwenkprofile 20, die in Richtung der x-Achse nebeneinander liegen (Figuren 2, 3) und an den Führungswagen 8 um eine parallel zu der x-Achse verlaufende Achse schwenkbar gelagert sind. Aus ihrer in Figur 4 gezeigten Ausgangslage sind die Schwenkprofile 20 gegen eine elastische Rückstellkraft auslenkbar. Zur Aufnahme des Pneumatikschlauchs 16 weisen sie im Querschnitt rechteckige Ausformungen 21 auf.

Jedes der Schwenkprofile 20 ist einer der Werkzeugkassetten 6 oder einer der Pratzen 7 zugeordnet und an ihrer der betreffenden Werkzeugkassette 6 oder der betreffenden Pratze 7 zugewandten Seite mit zwei vorspringenden, in Richtung der x-Achse voneinander beabstandeten Kugelkalotten 22 versehen. Mit Abstand von den Kugelkalotten 22 steht oberhalb von diesen an jedem der Schwenkprofile 20 eine Riegelleiste 23 vor (Figuren 4, 6 und 7).

Die Werkzeugkassetten 6 sind an der zu der Vorschubeinrichtung 3 hin liegenden Seite der Halteplatte 12 mit im Querschnitt keilförmigen und in Richtung der x-Achse voneinander beabstandeten Ausnehmungen 24 mit jeweils einer Schrägfläche 25 versehen. Außerdem ist an den Werkzeugkassetten 6 vorschubeinrichtungsseitig ein Winkelblech 13 angebracht. Dieses ist mehrfach abgewinkelt und bildet dabei einen Hintergriff 26 aus (Figuren 4 und 7).

Sowohl bei den Schwenkprofilen 20 an dem Führungswagen 8 als auch bei den Halteplatten 12 und den Winkelblechen 13 an den Werkzeugkassetten 6 handelt es sich um Verriegelungselemente der Verriegelungseinrichtungen 15.

Sollen nun ausgehend von den Verhältnissen nach Figur 4 Werkzeugkassetten 6 an dem Träger 10, im Einzelnen an Führungswagen 8 der Vorschubeinrichtung 3 angebracht werden, so sind die betreffenden Werkzeugkassetten 6 zunächst mit ihren Halteplatten 12 in die Einschubnuten 11 an den betreffenden Führungswagen 8 einzuführen, bis sie auf der Anschlagleiste 14 der Führungswagen 8 aufsitzen. Von der numerischen Steuerung der Stanzmaschine 1 gesteuert wird dann der Pneumatikschlauch 16 von der Druckversorgung der Stanzmaschine 1 in seinem Innern mit Druckluft beaufschlagt. In der Folge verändert die Schlauchwand 17 ihre Form. Unter einseitiger Abstützung an der Gegendruckleiste 19 beaufschlagt die sich verformende Schlauchwand 17 dabei die Schwenkprofile 20 und lenkt diese nach Art von Schwenkhebeln aus ihrer Ausgangsstellung gemäß Figur 4 in die Stellung gemaß Figur 7 aus. Die Kugelkalotten 22 der Schwenkprofile 20 stützen sich nun über die Schrägflächen 25 der Ausnehmungen 24 an den zugehörigen Werkzeugkassetten 6 ab. Entsprechend dem Verlauf der Wirkungslinie der Abstützkräfte werden die Werkzeugkassetten 6 dadurch auch gegen die Anschlagleiste 14 gedrückt. Mit ihren Riegelleisten 23 übergreifen die ausgelenkten Schwenkprofile 20 die Hintergriffe 26 an den Winkelblechen 13 der Werkzeugkassetten 6. Insgesamt stellen sich die in Figur 7 gezeigten Verhältnisse ein. Die Werkzeugkassetten 6 sind dabei gegen ein unerwünschtes Verlassen ihrer Gebrauchsstellung gesichert. Beibehalten werden diese Verhältnisse, bis eine oder mehrere der Werkzeugkassetten 6, beispielsweise zum Umrüsten der Stanzmaschine 1, von dem Träger 10 der Vorschubeinrichtung 3 abzunehmen sind. Zu diesem Zweck wird das Innere des Pneumatikschlauches 16 gesteuert drucklos geschaltet. Die Schlauchwand 17 nimmt infolgedessen ihre ursprüngliche, in Figur 4 gezeigte Form ein.

Die Rückverformung der Schlauchwand 17 wird zum einen durch deren Eigenelastizität bewirkt, zum andern üben auch die Schwenkprofile 20 die ebenfalls von einer Rückstellkraft beaufschlagt sind, eine entsprechende rückstellende Wirkung aus. Es ergeben sich nun erneut die Verhältnisse gemäß Figur 4. Die Werkzeugkassetten 6 können nunmehr nach oben von den betreffenden Führungswagen 8 abgenommen werden. Die Montage und die Demontage der Pratzen 7 vollziehen sich entsprechend.

## Patentansprüche

1. Haltevorrichtung für wenigstens eine an einer Werkzeugmaschine (1) ein- und auswechselbare Funktionseinheit (6, 7), mit zumindest einem Träger (10) für wenigstens eine Funktionseinheit (6, 7), wobei die Funktionseinheit (6, 7) mittels einer lösbaren Verriegelungseinrichtung (15) in einer Gebrauchsstellung an dem Träger (10) sicherbar ist und die Verriegelungseinrichtung (15) wenigstens ein dem Träger (10) zugeordnetes Verriegelungselement (20), wenigstens ein damit zusammenwirkendes, der Funktionseinheit (6, 7) zugeordnetes Verriegelungselement (12, 13) sowie wenigstens ein Betätigungselement umfasst in Form eines Hohlkörpers (16) mit einem gesteuert druckbeaufschlagbaren Hohlkörperinnern sowie mit einer durch Änderung des Druckes im Hohlkörperinnern verformbaren Hohlkörperwand (17), wobei wenigstens eines der Verriegelungselemente (12, 13; 20) als Schwenkhebel ausgebildet ist und die miteinander zusammenwirkenden Verriegelungselemente (12, 13; 20) durch innendruckgesteuerte Formänderung der Hohlkörperwand (17) relativ zueinander in eine Verriegelungs- und/oder in eine Freigabestellung bewegbar sind, indem das als Schwenkhebel ausgebildete Verriegelungselement (20) unter Beaufschlagung über die Hohlkörperwand (17) in eine Verriegelungs- und/oder in eine Freigabestellung auslenkbar ist, **dadurch gekennzeichnet, dass** das als Schwenkhebel ausgebildete Verriegelungselement (20) von einem Schwenkprofil gebildet ist, das an der zu dem oder den zugeordneten Verriegelungselementen (12, 13) hin weisenden Seite zwei mit Abstand nebeneinander liegende Kugelkalotten (22) sowie eine oberhalb der Kugelkalotten (22) vorstehende Riegelleiste (23) aufweist und dass an dem oder den zugeordneten Verriegelungselementen (12, 13) die Kugelkalotten (22) mit Ausnehmungen (24) und die Riegelleiste (23) mit einem Hintergriff (26) zusammenwirken, wobei in der Verriegelungsstellung des Schwenkprofils die Kugelkalotten (22) in die Ausnehmungen (24) eingreifen und die Riegelleiste (23) den Hintergriff (26) übergreift.

2. Haltevorrichtung nach Anspruch 1, **dadurch gekennzeichnet, dass** das schwenkprofil durch innendruckgesteuerte Formänderung der Hohlkörperwand (17) gegen eine elastische Rückstellkraft in die Verriegelungs- und/oder in die Freigabestellung bewegbar ist.

3. Haltevorrichtung nach einem der vorhergehenden Ansprüche, **dadurch gekennzeichnet, dass** die Hohlkörperwand (17) durch Änderung des Druckes im Hohlkörperinnern gegen eine elastische Rückstellkraft verformbar ist.

4. Haltevorrichtung nach einem der vorhergehenden Ansprüche, **dadurch gekennzeichnet, dass** der als Betätigungselement dienende Hohlkörper (16) trägerseitig vorgesehen ist.

5. Haltevorrichtung nach einem der vorhergehenden Ansprüche, **dadurch gekennzeichnet, dass** der als Betätigungselement dienende Hohlkörper (16) schlauchartig ausgebildet ist.

6. Haltevorrichtung nach einem der vorhergehenden Ansprüche, **dadurch gekennzeichnet, dass** das Hohlkörperinnere mittels Druckluft oder Drucköl gesteuert druckbeaufschlagbar ist.

7. Haltevorrichtung nach einem der vorhergehenden Ansprüche, mit einem Träger (10) für eine Mehrzahl von Funktionseinheiten (6, 7), die jeweils mittels einer lösbaren Verriegelungseinrichtung (15) in einer Gebrauchsstellung an dem Träger (10) sicherbar sind, **dadurch gekennzeichnet, dass** wenigstens ein Hohlkörper (16) mit einem gesteuert druckbeaufschlagbaren Hohlkörperinnern sowie mit einer durch Änderung des Druckes im Hohlkörperinnern verformbaren Hohlkörperwand (17) als gemeinsames Betätigungselement für die Verriegelungselemente (12, 13; 20) der Verriegelungseinrichtungen (15) mehrerer Funktionseinheiten (6, 7) vorgesehen ist.

8. Haltevorrichtung nach einem der vorhergehenden Ansprüche, **dadurch gekennzeichnet, dass** wenigstens eine in einer Gebrauchsstellung befindliche Funktionseinheit (6, 7) mittels des betreffenden, in die Verriegelungsstellung bewegten Schwenkprofil, gegen einen an dem Träger (10) für die Funktionseinheit (6, 7) vorgesehenen Positionieranschlag (14) beaufschlagt ist.

9. Haltevorrichtung nach einem der vorhergehenden Ansprüche, **dadurch gekennzeichnet, dass** sie als Magazin (3) für Bearbeitungswerkzeuge (5) der Werkzeugmaschine (1) ausgebildet und dass wenigstens eine Funktionseinheit in Form eines Werkzeughalters (6) vorgesehen ist, der mittels einer lösbaren Verriegelungseinrichtung (15) an einem Träger (10) des Magazins (3) in einer Gebrauchsstellung sicherbar ist.

10. Haltevorrichtung nach einem der vorhergehenden Ansprüche, **dadurch gekennzeichnet, dass** sie als Vorschubeinrichtung (3) für ein Bearbeitungswerkzeug (5) der Werkzeugmaschine (1) und/oder für ein Werkstück (4) ausgebildet und dass wenigstens eine Funktionseinheit in Form eines Werkzeughalters (6) und/oder wenigstens eine Funktionseinheit in Form eines Werkstückhalters (7) vorgesehen ist, der oder die mittels einer lösbaren Verriegelungseinrichtung (15) an einem Träger (10) der Vorschubeinrichtung (3) in einer Gebrauchsstellung sicherbar sind.

## Claims

1. Holding device for at least one functional unit (6, 7) which can be fitted to and removed from a machine tool (1), having at least one support (10) for at least one functional unit (6, 7), the functional unit (6, 7) being able to be secured to the support (10) in a position for use by means of a releasable locking device (15), and the locking device (15) comprising at least one locking element (20) associated with the support (10), at least one locking element (12, 13) which co-operates with the locking element (20) and which is associated with the functional unit (6, 7) as well as at least one operating element, in the form of a hollow body (16) having a hollow body interior which can be acted upon with pressure in a controlled manner and having a hollow body wall (17) which can be deformed by changing the pressure in the hollow body interior, at least one of the locking elements (12, 13; 20) being in the form of a pivoting lever and the locking elements (12, 13; 20) which co-operate with each other being able to be moved relative to each other into a locking and/or releasing position by changing of the shape of the hollow body wall (17) in a manner controlled by internal pressure, in that the locking element (20) in the form of a pivoting lever can be redirected into a locking and/or into a releasing position with action by means of the hollow body wall (17),
**characterised in that** the locking element (20) in the form of a pivoting lever is formed by a pivoting profile which has, at the side directed towards the associated locking element(s) (12, 13), two universal ball joints (22) which are located beside each other with spacing as well as a locking ledge (23) projecting above the universal ball joints (22), and **in that**, on the associated locking element(s) (12, 13), the universal ball joints (22) co-operate with recesses (24) and the locking ledge (23) co-operates with an edge (26), the universal ball joints (22) engaging in the recesses (24) and the locking ledge (23) engaging over the edge (26) in the locking position of the pivoting profile.

2. Holding device according to claim 1, **characterised in that** the pivoting profile can be moved into the locking and/or releasing position counter to a resilient restoring force by changing of the shape of the hollow body wall (17) in a manner controlled by internal pressure.

3. Holding device according to either of the preceding claims, **characterised in that** the hollow body wall (17) can be deformed counter to a resilient restoring force by changing the pressure in the hollow body interior.

4. Holding device according to any one of the preceding claims, **characterised in that** the hollow body (16) acting as an operating element is provided on the side of the support.

5. Holding device according to any one of the preceding claims, **characterised in that** the hollow body (16) acting as an operating element is of hose-like form.

6. Holding device according to any one of the preceding claims, **characterised in that** the hollow body interior can be acted upon with pressure in a controlled manner by means of compressed air or compressed oil.

7. Holding device according to any one of the preceding claims, having a support (10) for a plurality of functional units (6, 7) which can each be secured to the support (10) in a position for use by means of a releasable locking device (15), **characterised in that** at least one hollow body (16) having a hollow body interior which can be acted upon with pressure in a controlled manner and having a hollow body wall (17) which can be deformed by changing the pressure in the hollow body interior is provided as a common operating element for the locking elements (12, 13; 20) of the locking devices (15) of a plurality of functional units (6, 7).

8. Holding device according to any one of the preceding claims, **characterised in that** at least one functional unit (6, 7) located in a position for use is urged against a positioning stop (14) provided on the support (10) for the functional unit (6, 7) by means of the relevant pivoting profile which is moved into the locking position.

9. Holding device according to any one of the preceding claims, **characterised in that** it is in the form of a magazine (3) for processing tools (5) of the machine tool (1) and **in that** at least one functional unit is provided in the form of a tool holder (6), which can be secured to a support (10) of the magazine (3) in a position for use by means of a releasable locking device (15).

10. Holding device according to any one of the preceding claims, **characterised in that** it is in the form of a feed device (3) for a processing tool (5) of the machine tool (1) and/or for a workpiece (4) and **in that** at least one functional unit is provided in the form of a tool holder (6) and/or at least one functional unit is provided in the form of a workpiece holder (7), which functional unit(s) can be secured to a support (10) of the feed device (3) in a position for use by means of a releasable locking device (15).

## Revendications

1. Dispositif de fixation pour au moins une unité fonctionnelle (6, 7) amovible d'une machine-outil (1), comprenant au moins un support (10) pour au moins une unité fonctionnelle (6, 7), sachant que l'unité fonctionnelle (6, 7) peut être assurée dans une position d'utilisation sur le support (10) au moyen d'un dispositif de verrouillage (15) réversible et que le dispositif de verrouillage (15) comprend au moins un élément de verrouillage (20) associé au support (10), au moins un élément de verrouillage (12, 13) coopérant avec le précédent et associé à l'unité fonctionnelle (6, 7), ainsi qu'au moins un élément d'actionnement ayant la forme d'un corps creux (16) avec une cavité pouvant être mise sous pression de façon ciblée et avec une paroi (17) déformable en faisant varier la pression à l'intérieur du corps creux, sachant qu'au moins l'un des éléments de verrouillage (12, 13 ; 20) est réalisé sous forme de levier pivotant et que les éléments de verrouillage coopérant entre eux (12, 13 ; 20) peuvent effectuer des mouvements relatifs les uns par rapport aux autres et venir se mettre dans une position de verrouillage et/ou de déverrouillage en faisant varier la forme de la paroi (17) du corps creux en commandant la pression à l'intérieur de la cavité, dans la mesure où l'élément de verrouillage (20) réalisé en tant que levier pivotant peut être dévié dans une position de verrouillage et/ou dans une position de déverrouillage en étant sollicité par la paroi (17) du corps creux, **caractérisé en ce que** l'élément de verrouillage (20) réalisé en tant que levier pivotant est constitué par un profilé pivotant qui présente sur le côté pointant vers le ou les éléments de verrouillage associé(s) (12, 13) deux calottes sphériques (22) disposées côte à côte avec un écart, ainsi qu'un liteau de verrouillage (23) faisant saillie au-dessus des calottes sphériques (22), et **en ce qu'**au niveau de l'élément ou des éléments de verrouillage associés (12, 13), les calottes sphériques (22) coopèrent avec des évidements (24) et le liteau de verrouillage (23) avec une arête (26), sachant que, lorsque le profilé pivotant est en position verrouillée, les calottes sphériques (22) sont en prise avec les évidements (24) et le liteau de verrouillage (23) est en prise avec l'arête (26).

2. Dispositif de fixation selon la revendication 1, **caractérisé en ce que** le profilé pivotant peut être déplacé contre une force de rappel élastique dans la position de verrouillage et/ou dans la position de déverrouillage en faisant varier la forme de la paroi (17) du corps creux sous l'effet de la pression interne.

3. Dispositif de fixation selon l'une des revendications précédentes, **caractérisé en ce que** la paroi (17) du corps creux est déformable contre une force de rappel élastique en faisant varier la pression à l'intérieur du corps creux.

4. Dispositif de fixation selon l'une des revendications précédentes, **caractérisé en ce que** le corps creux (16) servant d'élément d'actionnement est prévu côté support.

5. Dispositif de fixation selon l'une des revendications précédentes, **caractérisé en ce que** le corps creux (16) servant d'élément d'actionnement est réalisé à la manière d'un tuyau souple.

6. Dispositif de fixation selon l'une des revendications précédentes, **caractérisé en ce que** l'intérieur du corps creux peut être mis sous pression de façon ciblée à l'aide d'air comprimé ou d'huile sous pression.

7. Dispositif de fixation selon l'une des revendications précédentes, comprenant un support (10) pour plusieurs unités fonctionnelles (6, 7) pouvant chacune être assurées dans une position d'utilisation sur le support (10) au moyen d'un dispositif de verrouillage réversible (15), **caractérisé en ce qu'**est prévu au moins un corps creux (16) doté d'une cavité pouvant être mise sous pression de façon ciblée et d'une paroi (17) pouvant être déformée en faisant varier la pression à l'intérieur du corps creux en tant qu'élément d'actionnement commun pour les éléments de verrouillage (12, 13 ; 20) des dispositifs de verrouillage (15) de plusieurs unités fonctionnelles (6, 7).

8. Dispositif de fixation selon l'une des revendications précédentes, **caractérisé en ce qu'**au moins une unité fonctionnelle (6, 7) en position d'utilisation est immobilisée contre une butée de positionnement (14) pour l'unité fonctionnelle (6, 7) prévue sur le support (10) au moyen du profilé pivotant en position de verrouillage.

9. Dispositif de fixation selon l'une des revendications précédentes, **caractérisé en ce qu'**il est réalisé en tant que magasin (3) pour les outils (5) de la machine-outil (1) et **en ce qu'**au moins une unité fonctionnelle est prévue sous la forme d'un porte-outil (6) pouvant être assuré dans une position d'utilisation sur un support (10) du magasin (3) au moyen d'un dispositif de verrouillage (15) réversible.

10. Dispositif de fixation selon l'une des revendications précédentes, **caractérisé en ce qu'**il est réalisé en tant que dispositif d'avance (3) pour un outil (5) de la machine-outil (1) et/ou pour une pièce à usiner (4), et **en ce qu'**au moins une unité fonctionnelle ayant la forme d'un porte-outil (6) et/ou au moins une unité fonctionnelle ayant la forme d'un porte-outil (7) est (sont) prévue(s), qui peut (peuvent) être assurée(s) dans une position d'utilisation sur un support (10) du dispositif d'avance (3) au moyen d'un dispositif de verrouillage (15) réversible.
